(19) Europäisches Patentamt
European Patent Office
Office européen des brevets

(11) **EP 3 040 280 A1**

(12) **EUROPEAN PATENT APPLICATION**

(43) Date of publication:
**06.07.2016 Bulletin 2016/27**

(51) Int Cl.:
***B64D 39/00*** (2006.01)    ***B64D 39/04*** (2006.01)

(21) Application number: **14382579.2**

(22) Date of filing: **30.12.2014**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Airbus Defence and Space SA 28906 Getafe Madrid (ES)**

(72) Inventors:
• **Fernández García, Francisco Javier E-28906 Getafe - Madrid (ES)**
• **Feito Menéndez, Alejandro E-28906 Getafe - Madrid (ES)**

(74) Representative: **ABG Patentes, S.L. Avenida de Burgos, 16D Edificio Euromor 28036 Madrid (ES)**

(54) **Method and system for air to air refuelling**

(57)    The invention provides a refuelling method for being used in refuelling operations, comprising the steps of: deploying a refuelling system (2) from a tanker aircraft, the refuelling system (2) further comprising a drag arrangement (1) which is arranged on the hose (3), detecting the presence of the probe (6) in the optimal position with respect to the drogue (4), by means of a probe sensor (5), when the probe (6) is deemed to be near enough the drogue (4), actuate on the drag arrangement (1), increasing the drag caused by it, and as a consequence of the drag increase, a speed decrease is caused to the drogue (4), causing its sudden approach and coupling to the probe (6).

FIG.2

**Description**

**TECHNICAL FIELD OF THE INVENTION**

The present invention belongs to the field of air to air refuelling, in particular to the field of improving the connection probe-drogue.

**BACKGROUND OF THE INVENTION**

Air to air refuelling is a very complex operation, as both the tanker and the receiver aircraft are flying, and this fact raises a great amount of circumstances that may disturb the positioning of said aircrafts: speed of aircrafts, swirls, clouds, etc. Further, the extremely narrow tolerance allowed in this operation makes it quite delicate.

Several systems may be used for refuelling. One of the most used is the hose & drogue. A tanker aircraft comprises a hose to provide fuel to a receiver aircraft. A drogue is attached at the end of the hose comprising a coupling element that is connected to a probe comprised in the receiving aircraft. Refuelling operations with the hose & drogue method involve several phases:

> Hose deployment: the hose is deployed from a drum placed in the tanker aircraft, thanks to the pulling force exerted by the aerodynamic drogue over the hose, while the drum system controls deployment speed.
> Hose standby: the hose is deployed to the nominal refuelling position and remains static waiting for a receiver aircraft to connect to it. The hose is kept in tension thanks to the aerodynamic force of the drogue.
> Contact: a receiver aircraft inserts its probe into the drogue. The receiver aircraft must approach the drogue and move forward for the insertion of the probe into the drogue, with a relative speed high enough to overcome the resistance provided by the latches of the drogue, which will keep the probe locked in place while the fuel is transferred. The aerodynamic force caused by the drogue helps to keep the coupled drogue and probe in a static position. Once the probe is connected, the fuel transfer takes place. The drum system on the tanker keeps hose tension.
> Disconnection: the receiver aircraft separates backwards from the tanker aircraft. The hose system holds the hose in its static position until disconnection happens.
> Hose recovery: the drum system recovers the hose. The aerodynamic force over the drogue keeps the hose tension.

The drogue comprises a canopy, which provides aerodynamic force. A low-speed drogue or a high-speed drogue will be chosen to provide the required drag in the hose standby stage. Some systems aim to modify the shape of the canopy of the drogue to use the same drogue in both scenarios, but they are not actively controlled neither provide a drag adjustment on demand.

Further, the drogue may be damaged, either by the probe impact in the contact phase, if the receiver aircraft is not very careful in this stage, or during the contact stage, because the probe, when being inserted in the drogue, causes the hose to lose tension and, due to the drum trend to keep the hose taut, causes a whiplash wave that may result in damaging or even breaking the probe. In any of these cases, a damaged drogue may produce aerodynamic instabilities that may prevent the hose from being recovered.

All these details make this operation need many hours of training, and result sometimes in the failure of the operation, as the success of said operation depends totally on the receiver aircraft's pilot who has to estimate the position of both aircrafts in order to carry out the refuelling operation.

**SUMMARY OF THE INVENTION**

The present invention provides an alternative solution for the aforementioned problems, by a method for air to air refuelling according to claim 1, a drogue according to claim 7, and a refuelling system according to claim 10. In dependent claims, preferred embodiments of the invention are defined.

In a first inventive aspect, the invention provides a *refuelling method for being used in refuelling operations by a refuelling system from a tanker aircraft, the refuelling system comprising,*
*a hose,*
*a drogue further comprising,*
*a drogue canopy, and*
*a variable drag device,*
*the method comprising the step of actuating actively on the drag device, varying the total drag, being the total drag the sum of the drag from the drag device and the drag from the drogue canopy, by varying the drag caused by said drag device.*

The variable drag device is suitable for being actively controlled during one of the steps of a refuelling operation.

This actuation on the variable drag device modifies the drag caused by said drag device, therefore causing a variation on the total drag of the refuelling system, being:

$$D = D_{drag\ device} + D_{drogue\ canopy} \quad ,$$

where D is the total drag, or aerodynamic drag, of the refuelling system.

Advantageously, the control of said total drag D allows the refuelling operation to be performed in a more effective way, in order to achieve a better coupling between the two aircraft involved. Furthermore, the active control of the drag device, during the refuelling method allows achieving the sufficient drag for the operation to be completed with a smaller drogue canopy than those used in the state of the art for the same operation.

The drag of the drogue canopy, $D_{drogue\ canopy}$, depends on the canopy's geometry, therefore it may be considered a fixed value during the refuelling operation. This drag value shall vary when the canopy is replaced by a canopy with different geometric characteristics.

In a particular embodiment, the refuelling method further comprises a step of coupling, for connecting the drogue to a probe, which comprises actuating on the drag device for achieving a maximum total drag.

Advantageously, this method is a new way of performing the contact operation in which the receiver aircraft may remain stationary or moving forward at very low relative speed with respect to the hose, different from current state of the art that requires that the receiver's probe to hit the hose drogue or coupling with an important relative speed to achieve locking. Said movement of the receiver aircraft can be achieved at low relative speed as the actuation on the drag device allows the total drag to increase considerably, causing the movement of the drogue which results in its coupling to the receiver's probe.

In a particular embodiment, the refuelling method further comprises, before the step of coupling, a step of detecting the presence of the probe of a receiving aircraft entering the drogue.

Advantageously, the detection of the probe when said probe is entering the drogue allows the total drag to be adjusted in order to have the appropriate value to produce the movement of the drogue which ensures the coupling between hose and probe.

In a particular embodiment, the refuelling system further comprises a probe sensor, and the refuelling method comprises a step of detecting the presence of a probe by means of the probe sensor.

Advantageously, the probe sensor allows the step of detection to be fulfilled in a more reliable way, furthermore allowing the variation of the drag produced by the drag device, and therefore of the total drag, D, in order to be adjusted to the real value of total drag needed. The probe sensor detects the probe once said probe is located inside the drogue canopy, in the vicinity of the coupling member, then fulfilling the variation of the total drag D.

This method avoids the hit between the drogue canopy and the probe, therefore avoiding the damage of the drogue canopy. If the probe is misaligned with the principal axis, common both for the hose and the drogue, the lecture of the probe sensor will not allow the drag device to produce drag, so the movement of the drogue towards the probe will not happen, thus avoiding any contact between the probe and the drogue canopy.

In a particular embodiment, the refuelling method comprises actuating on the drag device by means of a drag controller:

- in a programmed way at any time, and/or
- depending on the probe sensor.

The actuation of the drag controller in a programmed way at any time provides the control of the total drag in a constant way when performing a refuelling operation. Said program considers both environmental conditions as well as the position lecture of the sensor, or only said lecture of the sensor.

As an advantage, the actuation of the drag controller depending on the probe sensor of the refuelling system allows the total drag to be controlled in a more efficient way, as it is regulated depending on the position of both aircrafts and the conditions of the atmosphere.

The actuation can also be performed both by a program at any time of the refuelling operation, along with the variable conditions of said operation as described before, and which are known to the system by means of the probe sensor. This combined actuation allows the drag device to be controlled by the drag controller both in a constant and efficient way.

Furthermore, a smaller drogue canopy can be used thanks to the drag controller, as it provides the additional drag needed when required at each refuelling phase by actuating the drag device. During the refuelling operation an increment of aerodynamic force on the drogue is needed to help the hose to be taken out from the hose drum. With this new method, the coupling between the probe and the drogue can be performed acting on said drogue, instead of on the probe of the receiver, due to a drag rising carried out by the drag device throughout the drag controller. This possibility minimizes the possibility that a mechanical wave can travel through the hose because the hose vane is not shortened.

In a particular embodiment, the refuelling method further comprises a step where the drag device is not actuated, being the drag from the drag device zero and therefore causing the total drag to be minimum.

Advantageously, the non-actuation on the drag device during part of the refuelling operation allows the drag from the drag device to be null, causing the total drag to be minimum, being the drag from the drogue canopy a dependant value of its geometry and therefore fixed during the refuelling operation.

Said minimum value of the total drag is given by the fixed value of the drag of the drogue canopy, which can be therefore dimensioned in accordance to said minimum value.

The drogue canopy is smaller in size than the canopies from the current state of the art, as the total drag needed for every step of the refuelling system is achieved by means of the active actuation of the drag device. Thus, the drogue is advantageously smaller and lower in weight.

In a second inventive aspect, the invention provides a *drogue, comprising a drogue canopy, a coupling member, a drag device and union means adapted to be coupled to a hose, the drogue adapted for being used in an air to air refuelling system of a receiver aircraft and also adapted for carrying out the steps of the preceding method.*

Said drogue comprises the elements affecting the total drag, being these the drogue canopy and the drag device. The drogue canopy is united to the hose by means of the coupling member throughout the union means. Advantageously, the drag device allows modifying the total drag by means of modifying its own aerodynamic drag, when actuated.

In a particular embodiment, the drogue comprises a drag device placed on the coupling member.

Advantageously, placing said drag device on the coupling member allows the drag device to be independent from the drogue canopy, being therefore the total drag the sum of two independent values of drag, exerted in the same direction.

In a particular embodiment, the drogue is also adapted for actively varying the drag continuously during the refuelling operation.

Advantageously, a continuous and active variation provides a reliable control of the drag from the drag assembly and therefore from the total drag.

In a third inventive aspect, the invention provides a *refuelling system comprising a hose and a drogue*.

In a particular embodiment, the refuelling system comprises a hose and a drogue according to the drogue on the second inventive step.

Advantageously, the addition of a drogue of said characteristics to an already known refuelling system allows said new system to perform the steps of the method already presented.

In a particular embodiment, the refuelling system comprises a probe sensor.

In a particular embodiment, the refuelling system comprises a probe sensor placed on the coupling member.

Advantageously, placing a sensor on the coupling member allows the system to detect the insertion of the receiver's probe in the coupling member of the drogue and, based on that detection, an increase of the total drag will be generated throughout the drag device.

In a particular embodiment, the refuelling system further comprises a drag controller adapted to control the drag device of the drogue such that the drag controller controls the total drag.

Advantageously, the drag controller will allow modification of the aerodynamic drag of the drag device, therefore modifying the total drag. This action is performed according to a command from the drag device control system included in the drag controller.

In a particular embodiment, the refuelling system further comprises a drag device of the drogue comprising a turbine, the spinning speed thereof being controlled by the drag controller, thus causing a total drag increase or decrease.

Advantageously, a turbine not only allows controlling the drag from the drag device, and therefore the total drag, but also obtaining electric power to be used on electronic devices comprised on the refuelling system, for example, at the end of the hose.

In a particular embodiment, the refuelling system further comprises a drag device of the drogue comprising a frustoconical element adapted to be opened or closed, causing a total drag increase or decrease.

Advantageously, said element allows controlling the drag from the drag device, and therefore the total drag.

In a particular embodiment, the frustoconical element presents an axial configuration, and is placed concentrically with the coupling member axis.

Said element arranges an axially displaceable cone which modifies the total drag by modifying the outlet area of the aerodynamic current passing through a cylindrical fairing.

In a particular embodiment, the refuelling system further comprises a drag device of the drogue comprising a plurality of spoilers adapted to be opened or closed with circular symmetry, causing a total drag increase or decrease.

Advantageously, said element allows controlling the drag from the drag device, and therefore the total drag.

In a particular embodiment, the spoilers are configured as variable angle petal deflectors.

In a particular embodiment, the refuelling system further comprises the drogue further comprising a coupling member with a probe sensor, and the drag device of the drogue is adapted to provide energy to at least one of the drag controller and the probe sensor.

The drag device's configuration can provide electric power to be used on electronic devices comprised on the refuelling system, such as the drag controller and the probe sensor.

Advantageously, obtaining said needed power from the drag device avoids generating it on any other aircraft system, therefore allowing the drogue to be self-sustaining.

All the features described in this specification (including the claims, description and drawings) and/or all the steps of the described method can be combined in any combination, with the exception of combinations of such mutually exclusive features and/or steps.

## DESCRIPTION OF THE DRAWINGS

These and other characteristics and advantages of the invention will become clearly understood in view of the detailed description of the invention which becomes apparent from a preferred embodiment of the invention, given just as an example and not being limited thereto, with reference to the drawings.

Fig 1.      This figure shows a refuelling system known in the state of art

Fig 2.      This figure shows a refuelling system comprising a drogue, and a detail view, A, of said drogue according to the invention.

Figs 3a-3c   These figures show side views of different embodiments of drag devices of a drogue according to the invention: a turbine, a frustoconical element and a plurality of spoilers.

Figs 4a-4c   These figures show different steps of a refuelling method according to the invention.

Fig 5      This figure shows a graph with qualitative drag values required in the different steps of a refuelling method according to the invention.

Fig 6      This figure shows a graph with qualitative drag values of drogue systems known from the state of art and the drag values provided by a drag device according to this invention.

## DETAILED DESCRIPTION OF THE INVENTION

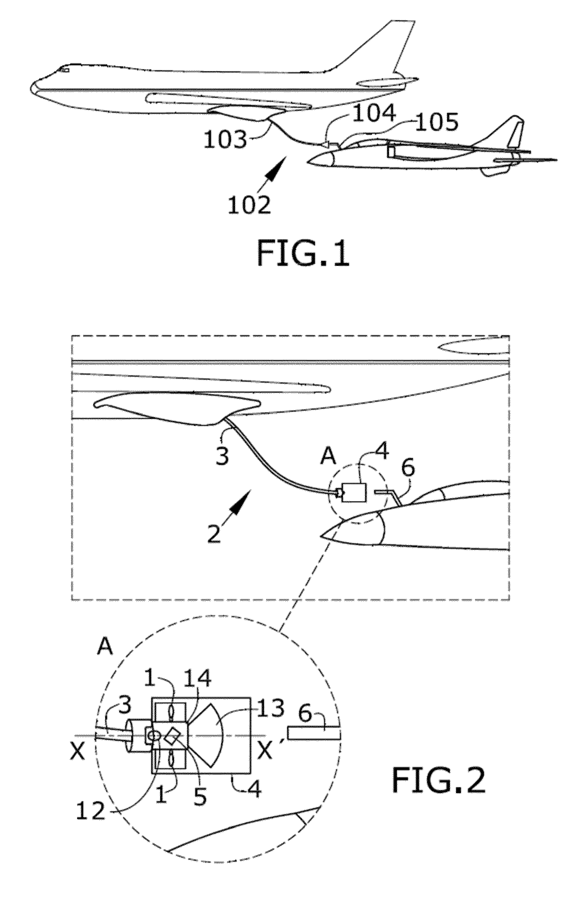

Figure 1 presents a refuelling system (102) known in the state of art. This refuelling system (102) comprises a hose (103), a drogue (104) and a probe (105).

Figure 2 shows a refuelling system (2) comprising a drag device (1) according to an embodiment of the invention. The refuelling system (2) comprises a hose (3) and a drogue (4). The detailed view A in Figure 2 shows a drogue (4) according to an embodiment of the invention, said drogue (4) comprising a drogue canopy (13), said drag device (1) and a coupling member (14) with a probe sensor (5). The drogue (4) further comprises union means (12) which are located between the hose (3) and the coupling member (14). The union means (12) allow the drogue (4) throughout the coupling member (14) to be united to the hose (3). The union means (12) are, for example, a ball and socket joint.

The coupling member (14) along with the probe sensor (5) located on it are protected by a fairing.

The drogue (4) further comprises a drag controller (not shown) which allows controlling the drag device (1) in a way that said drag controller is adapted to cause the drag produced by the drag device (1) to change according to the air speed of the receiver aircraft, thus varying the total drag, D.

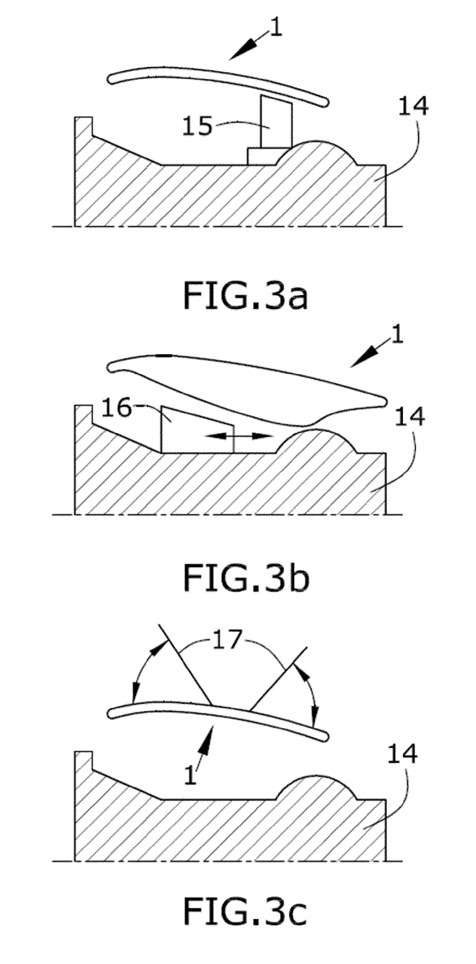

In a particular embodiment, the drag device (1) comprises a turbine (15) with blades, the spinning speed thereof is controlled by the drag controller (not shown), thus causing a drag increase or decrease of the drag of the drag device, $D_{drag\ device}$. A side view of this embodiment is shown in Figure 3a.

In a particular embodiment, the drag device (1) comprises a frustoconical element (16) adapted to be moved along the body of the coupling member (14), thus causing a ram duct to be opened or closed so causing a drag increase or decrease of the value of the drag of the drag device, $D_{drag\ device}$. A side view of this embodiment is shown in Figure 3b.

In a particular embodiment, the drag device (1) comprises a plurality of spoilers (17) adapted to be opened or closed with circular symmetry around the body of the coupling member (14), thus causing a drag increase or decrease of the value of the drag of the drag device, $D_{drag\ device}$. A side view of this embodiment is shown in Figure 3c.

Further, and shown in Figure 2, the receiving aircraft comprises a probe (6), which is intended to be coupled to the coupling member (14) of the drogue (4).

Advantageously, the presence of a drag device (1) according to the invention in a refuelling system (2) makes the drogue canopy (13) need not to be as big as in the event of a refuelling system (2) without a drag device (1) according to the invention, as said drag device (1) makes unnecessary that the drogue canopy (13), by means of varying its size, provides the drag needed in all the steps of the refuelling operation, as total drag, D, of the drogue (4) is caused both by the drogue canopy (13) and by the drag device (1). This causes that the size of the pylon containing the hose drum is not conditioned by the size of the drogue canopy (13), and the smaller the drogue canopy (13), the smaller the distortion in the drag curve caused by the choice of a particular drogue canopy (13).

Advantageously, the drag device (1) is adapted to provide energy to other elements during all the process of refuelling, since the deployment of the hose (3) until the decoupling of the probe (6) and the coupling member (14) of the drogue (4). In different embodiments, these elements are the drag controller and the probe sensor (5).

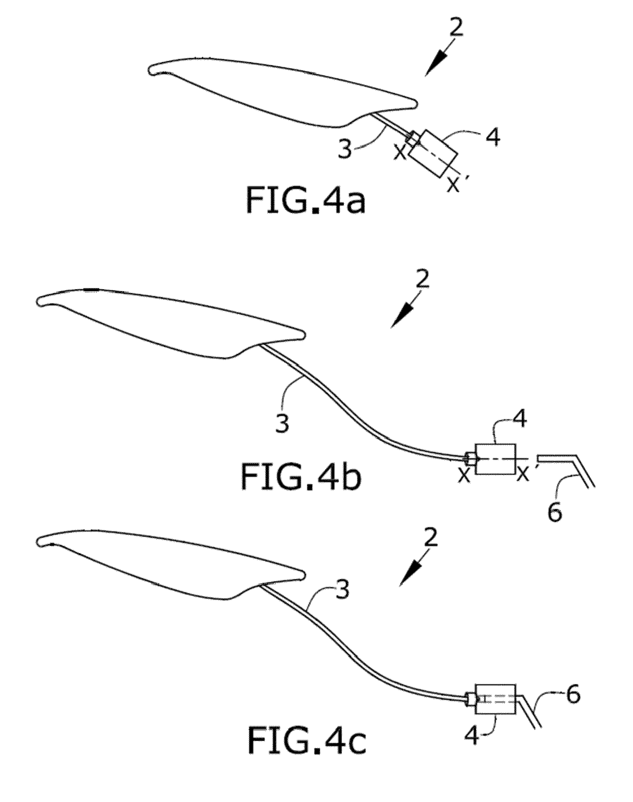

The presence of a drag device (1) in this embodiment makes it possible to perform a method of air to air refuelling, with the following steps, shown in Figures 4a-4c:

a) Fig 4a: deploying a refuelling system (2) comprising a hose (3), a drogue (4) comprising a drogue canopy (13) and a coupling member (14) with a probe sensor (5) as shown in figure 2, wherein the refuelling system (2) further comprises a drag device (1) which is arranged on the coupling member (14), and union means (12) located between the coupling member (14) and the hose (3)

b) Fig 4b: detecting the presence of a probe (6) of a receiving aircraft in the optimal position with respect to the drogue (4), by means of the probe sensor (5),

c) when the probe (6) is deemed to be in the optimal position with respect to the drogue (4), actuate on the drag device (1), increasing the drag caused by it and therefore the total drag, D,

d) Fig 4c: as a consequence of the total drag D increase, a speed decrease is caused to the drogue (4), causing its sudden approach and coupling to the probe (6) by means of the coupling member (14),

In a particular embodiment, the detection is accomplished by aligning both the probe (6) and the coupling member (14), particularly the hole of the coupling member (14), once the probe (6) has pierced the drogue canopy (13).

The total drag, D, by means of the variation of the drag of the drag device, is increased once the probe sensor (5) has detected the probe (6) surrounding the coupling member (14) and not only on the surroundings of the drogue canopy (13) as in this position said canopy could be damaged.

The probe sensor (5) is therefore placed on the coupling member (14) in order to be able to detect the instant when the probe (6) is in the correct position, around the coupling member (14) therefore sending the signal to the drag device (1) for increasing its drag value.

In a particular embodiment of the system, the drag device (1) further comprises a drag controller, not shown in the figures. The drag controller is suitable for actuating on the drag device (1), changing the value of the drag provided by the drag device (1) according to an optimal value set for each step of the refuelling process.

With a refuelling system (2) comprising the drag device (1) of the invention, the receiver aircraft does not need to perform a sudden impulse to approach the drogue (4) with its probe (6), as it is the drogue (4) itself which approaches to the probe (6) of the receiver aircraft. This movement has several further advantages:

The first one is the removal of the whiplash caused by a loss of tension in the hose immediately after the contact and displacement of the receiver during said contact, therefore reducing the distance between both aircrafts, which is compensated in part by the movement of the hose drum in the refuelling methods disclosed in the state of the art. Thus, due to the sudden impulse that the receiver aircraft causes in the probe (105) when coupling it with the hose (103), the probe (105) pushes the hose (103) and makes this latter becoming temporarily loose. As the hose drum detects this lack of stress in the hose (103), it pulls the hose (103) to keep it taut. With the system described in the embodiment, the drogue (4) is taut during all the process, and the drum does not pull the hose (3), so no whiplash is caused to it. The drogue (4) is able to anticipate the pull of the hose drum, in order to reduce said whiplash, so the receiver shall not approach the tanker, so the vain is not reduced.

Another advantage is that the coupling is achieved in a faster and safer way, as it is much faster and safer that the end of a hose (3) approaches an aircraft than an aircraft approaches the end of a hose (3). The aircraft is asked for keeping its position, instead of carrying out an approaching manoeuvre.

Another advantage is that drogue canopies (13) are not jeopardized by a badly calculated impulse of the receiver aircraft. In the systems comprised in the state of art, if the pilot of the receiver aircraft calculated the impulse with a slight error, the probe (105) could easily damage the drogue (104). This situation does not happen with the refuelling system (2) according to the invention.

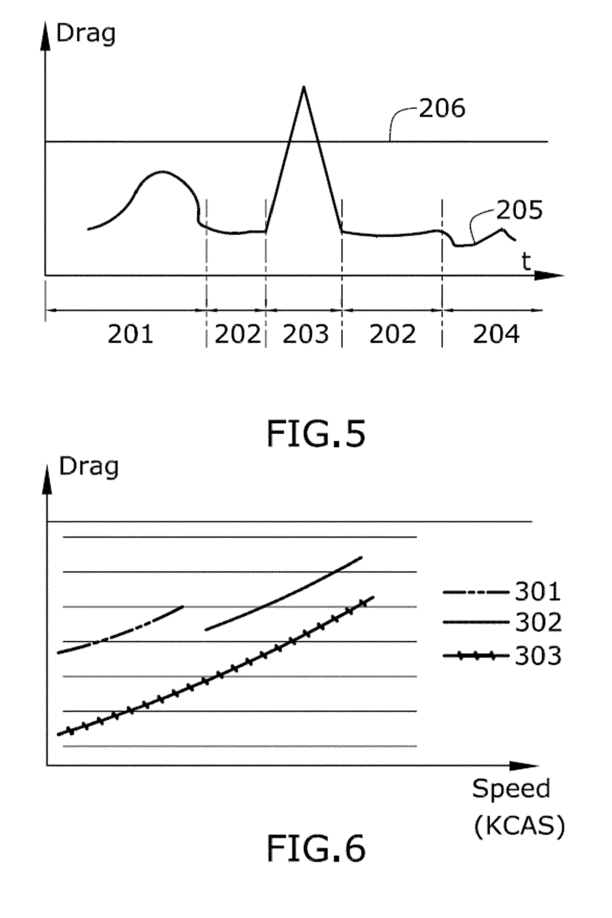

The use of a drag device (1) as the invention makes a smaller drogue canopy (13) suitable for being used. Thus, the drag range for a constant value of KCAS is wider than in the case of a drogue (4) which does not use a drag device (1) according to the invention. This fact is very important, as the total drag, D, needed in each step of the refuelling process is different. As shown in Figure 5, a refuelling operation in a particular embodiment comprises:

The deployment step (201) which needs a variable drag, said drag being lower at the beginning of the stage, higher while the hose is unrolling and is lower again when the drogue is near the stationary extension

The standby steps (202) which always need a low drag

The contact step (203) which needs a peak of high drag, which is higher than the maximum drag provided by the drogues of the state of art, as this is the drag needed to cause the drogue suddenly couple to the probe

The recovery step (204) which needs a low drag, even lower than the standby stage

The first line (205) representing the drag caused by a refuelling system according to the invention presents different values reachable by a refuelling system (2) according to the invention. The second line (206) representing the drag caused by a refuelling system of the prior art is a constant line.

This wide range of drag values is acceptable by the drag device (1) of the invention, while the drogues known in the state of art are not able to provide such a wide range of drag values. Figure 6 show a comparative graph showing a first drag line (301) provided by a high speed drogue known from the state of art and a second drag line (302) provided by a low speed drogue known from the state of art. Finally, a third drag line (303) represents the drag values provided by the drag device (1) of the invention, as a function of KCAS.

**Claims**

1.  Refuelling method for being used in refuelling operations by a refuelling system (2) from a tanker aircraft, the refuelling system (2) comprising,
    a hose (3),
    a drogue (4) further comprising,

    - a drogue canopy (13), and
    - a variable drag device (1),
    the method comprising the step of actuating actively on the drag device (1), varying the total drag (D), being the total drag (D) the sum of the drag ($D_1$) from the drag device (1) and the drag ($D_{13}$) from the drogue canopy (13), by varying the drag ($D_1$) caused by said drag device (1).

2.  Refuelling method according to claim 1 further comprising a step of coupling, for coupling the drogue (4) to a probe (6), which comprises actuating on the drag device (1) for achieving a maximum total drag (D).

3.  Refuelling method according to any of claims 1 or 2 further comprising, before the step of coupling, a step of detecting the presence of the probe (6) of a receiving aircraft nearby the drogue (4).

4.  Refuelling method according to claim 3, wherein the refuelling system (2) further comprises a probe sensor (5), and the refuelling method comprises a step of detecting the presence of a probe (6) by means of the probe sensor (5).

5.  Refuelling method according to any of the preceding claims, comprising actuating on the drag device (1) by means of a drag controller:

    - in a programmed way at any time, and/or
    - depending on the probe sensor (5).

6.  Refuelling method according to any of the preceding claims, also comprising a step where the drag device (1) is not actuated, being the drag ($D_1$) from the drag device (1) zero, and therefore causing the total drag (D) to be minimum.

7.  Drogue (4), comprising a drogue canopy (13), a coupling member (14), a drag device (1) and union means (12) adapted to be coupled to a hose (3), the drogue (4) adapted for being used in an air to air refuelling system (2) of a receiver aircraft and also adapted for carrying out the steps of a method according any of preceding claims.

8.  Drogue (4) according to claim 7 wherein the drag device (1) is on the coupling member (14).

9.  Drogue (4) according to claim 8 also adapted for actively varying the drag continuously during the refuelling operation.

10.  Refuelling system (2) comprising a hose (3) and a drogue (4) according to any of claims 8 or 9.

11.  Refuelling system (2) according to claim 10 further comprising a probe sensor (5).

12.  Refuelling system (2) according to claim 11 wherein the probe sensor (5) is placed on the coupling member (14).

13.  Refuelling system (2) according to any of claims 10 to 12 further comprising a drag controller adapted to control the drag device (1) of the drogue (4) such that the drag controller controls the total drag (D).

14. Refuelling system (2) according to claim 13, wherein the drag device (1) of the drogue (4) comprises a turbine, the spinning speed thereof being controlled by the drag controller, thus causing a total drag (D) increase or decrease.

15. Refuelling system (2) according to claim 13, wherein the drag device (1) of the drogue (4) comprises a frustoconical element adapted to be opened or closed, causing a total drag (D) increase or decrease.

16. Refuelling system (2) according to claim 13, wherein the drag device (1) of the drogue (4) comprises a plurality of spoilers adapted to be opened or closed with circular symmetry, causing a total drag (D) increase or decrease.

FIG.1

FIG.2

FIG.3a

FIG.3b

FIG.3c

FIG.4a

FIG.4b

FIG.4c

FIG.5

FIG.6

Europäisches
Patentamt

European
Patent Office

Office européen
des brevets

**EUROPEAN SEARCH REPORT**

Application Number

EP 14 38 2579

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2010/001124 A1 (FELDMANN MICHAEL S [US]) 7 January 2010 (2010-01-07) * paragraphs [0016], [0017], [0026], [0029], [0031], [0033]; figures 1,2,10,12,18 * | 1-13,15, 16 | INV. B64D39/00 B64D39/04 |
| X | US 2013/168497 A1 (RIX OHAD [IL]) 4 July 2013 (2013-07-04) * paragraphs [0322], [0323], [0338]; figures 13c, 13d * | 1,5-10, 13,15,16 | |
| X | US 6 994 294 B2 (SAGGIO FRANK [US] ET AL SAGGIO III FRANK [US] ET AL) 7 February 2006 (2006-02-07) * column 5, line 40 - line 59; figures 1,9,18 * | 1-14,16 | |
| X | US 2014/306063 A1 (KUSNITZ JOSHUA M [US]) 16 October 2014 (2014-10-16) * paragraphs [0047], [0050], [0051]; figures 9,10 * | 1,5-10, 13,15,16 | |

TECHNICAL FIELDS
SEARCHED     (IPC)

B64D

The present search report has been drawn up for all claims

| Place of search | Date of completion of the search | Examiner |
|---|---|---|
| Munich | 10 June 2015 | Wojski, Guadalupe |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

....................................................................

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 14 38 2579

This annex lists the patent family members relating to the patent documents cited in the above-mentioned European search report.
The members are as contained in the European Patent Office EDP file on
The European Patent Office is in no way liable for these particulars which are merely given for the purpose of information.

10-06-2015

| Patent document cited in search report | | Publication date | Patent family member(s) | | Publication date |
|---|---|---|---|---|---|
| US 2010001124 | A1 | 07-01-2010 | CA | 2645653 A1 | 17-04-2008 |
| | | | EP | 1968853 A2 | 17-09-2008 |
| | | | US | 2010001124 A1 | 07-01-2010 |
| | | | WO | 2008045116 A2 | 17-04-2008 |
| US 2013168497 | A1 | 04-07-2013 | EP | 2800695 A2 | 12-11-2014 |
| | | | EP | 2800696 A2 | 12-11-2014 |
| | | | KR | 20140114003 A | 25-09-2014 |
| | | | KR | 20140114004 A | 25-09-2014 |
| | | | US | 2013168497 A1 | 04-07-2013 |
| | | | US | 2013168498 A1 | 04-07-2013 |
| | | | US | 2014353430 A1 | 04-12-2014 |
| | | | US | 2015136911 A1 | 21-05-2015 |
| | | | WO | 2013102903 A2 | 11-07-2013 |
| | | | WO | 2013102906 A2 | 11-07-2013 |
| US 6994294 | B2 | 07-02-2006 | GB | 2405384 A | 02-03-2005 |
| | | | US | 2005045768 A1 | 03-03-2005 |
| | | | US | 2005269456 A1 | 08-12-2005 |
| | | | US | 2008027593 A1 | 31-01-2008 |
| US 2014306063 | A1 | 16-10-2014 | US | 2014306063 A1 | 16-10-2014 |
| | | | WO | 2014204539 A1 | 24-12-2014 |

EPO FORM P0459

For more details about this annex : see Official Journal of the European Patent Office, No. 12/82